# EUROPEAN PATENT APPLICATION

(11) **EP 2 116 653 A1**
(43) Date of publication of application: **11.11.2009**
(21) Application number: 07850468.5
(22) Date of filing: 12.12.2007
(51) Int. Cl.: E02F 9/26, E02F 9/18, E02F 9/24

(54) **REAR MONITOR CAMERA DEVICE FOR WORKING VEHICLE**

(30) Priority: 30.01.2007 JP 2007018746
(71) Applicant: Caterpillar Japan Ltd., Tokyo 158-0097 (JP)
(72) Inventor: UTO, Ryoji, Setagaya-ku Tokyo 158-0097 (JP); AGARIHAMA, Yoshihiro, Kobe-shi Hyogo 652-0863 (JP)
(74) Representative: Müller-Boré & Partner Patentanwälte
(86) International application number: PCT/JP2007/073917
(87) International publication number: WO 2008/093469

(57) **Abstract**

A rear monitor camera device for a working vehicle equipped with a cable arrangement structure which is capable of preventing damage to a cable connected to a rear monitor camera installed on a counterweight and does not spoil the beautyu of the counterweight. The rear monitor camera device 20 comprises a monitor camera 22 attached to the outer surface of a counterweight 14 installed on the rear part of the vehicle body, and a through-hole 26 which permits the passage of a cable 24 connected to the monitor camera 22 and is formed in the counterweight 14 from the outer surface thereof through to the inside of the vehicle body.

## Description

### Technical Field:

This invention relates to a rear monitor camera device for an working vehicle and, more particularly, to a cable arrangement structure connected to the monitor camera installed on a counterweight.

### Background Art:

A working vehicle having a counterweight at a rear part of the vehicle body, such as a hydraulic excavator, is equipped with a rear monitor camera at an upper part on the outer surface of the counterweight, and a cable connected to the monitor camera is arranged along the outer surface of the counterweight (e.g., see patent document 1).

According to another example of installing the monitor camera (e.g., patent document 2), the monitor camera is installed on a plate attached to the outer surface of a counterweight, and a cable connected to the monitor camera is permitted to run through a recessed groove in the counterweight covered with the mounting plate.
Patent document 1: JP-A-2006-16914 (Fig. 4)
Patent document 2: JP-A-2006-336361 (Fig. 4)

### Disclosure of the Invention:

### Problems that the Invention is to Solve:

The rear monitor camera devices of the above conventional working vehicles are accompanied by problems that must be solved as described below in relation to arranging the cable that is connected to the monitor camera.

That is, in case the cable connected to the monitor camera is arranged along the outer surface of the counterweight, the cable may come in contact with foreign matter or may inadvertently be trod down by a worker who climbs the vehicle body and damaged. Or, in case the cable is covered with a plate without running through the recessed groove in the counterweight, damage may be prevented but spoiling the beauty of the counterweight which is a part of the appearance of the vehicle body.

The present invention was accomplished in view of the above facts and its technical problem is to provide a rear monitor camera device for a working vehicle equipped with a cable arrangement structure which is capable of preventing damage to a cable connected to a monitor camera installed on a counterweight and does not spoil the beauty of the counterweight.

### Means for Solving the Problems:

In order to solve the above technical problem according to the present invention, there is provided a rear monitor camera device for a working vehicle, comprising a monitor camera attached to the outer surface of a counterweight installed on the rear part of the vehicle body, and a through-hole which permits the passage of a cable connected to the monitor camera and is formed in the counterweight from the outer surface thereof through to the inside of the vehicle body.

Desirably, the monitor camera is held in a recessed portion formed in the outer surface of the counterweight, and one end of the through-hole is opened in the recessed portion. The other end of the through-hole opening inside of the vehicle body is opened to the engine room.

The counterweight comprises a counterweight body of the form of a container and a filler filled therein, and the through-hole comprises a pipe member attached to the counterweight body integrally together. There is, further, provided a cover covering the recessed portion so as to be opened and closed.

### Effects of the Invention:

In the rear monitor camera device for a working vehicle constituted according to the present invention, the cable connected to the monitor camera attached to the outer surface of the counterweight is permitted to run through the through-hole formed in the counterweight from the outer surface thereof through to the inside of the vehicle body.

Therefore, the cable connected to the monitor camera is completely prevented from being damaged due to coming in contact with foreign matter or being trod down by the worker and, besides, the appearance is not spoiled since the through-hole does not affect the appearance of the counterweight.

### Brief Description of the Drawings:

[Fig. 1] is a detailed view of a rear monitor camera device for a working vehicle constituted according to the present invention, and is a sectional view of when Fig. 2 is seen in the direction of arrow B-B.
[Fig. 2] is a perspective view illustrating in detail a counterweight portion shown in Fig. 3.
[Fig. 3] is a perspective view of a hydraulic excavator which is an working vehicle equipped with the rear monitor camera device.

### Best Mode for Carrying Out the Invention:

Hereinafter, the rear monitor camera device for a working vehicle constituted according to the invention will be described in further detail with reference to the accompanying drawings showing a preferred embodiment of a hydraulic excavator which is a representative working vehicle.

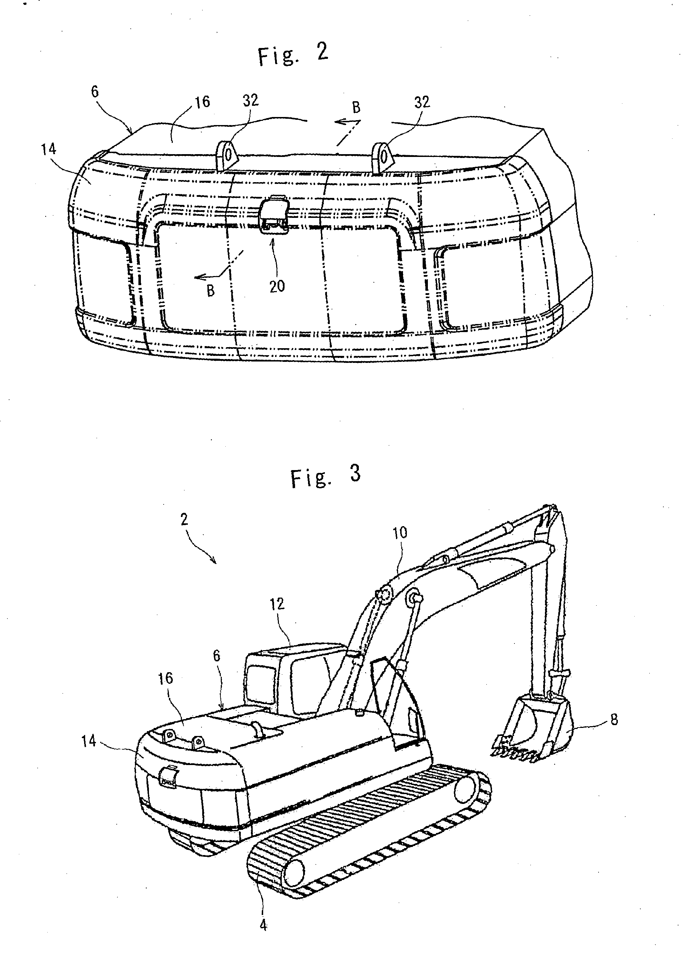

The hydraulic excavator will be described with reference to Fig. 3. The hydraulic excavator generally designated at 2 includes a swing table 6 which is a vehicle body mounted on an undercarriage 4 so as to swing.

The swing table 6 includes, in the front portion thereof (right side in Fig. 3), an operation arm device 10 having a bucket 8 and a cab 12, and includes, in the rear portion thereof (left side in Fig. 3), a counterweight 14 and an engine room 16 in the inside neighboring thereto.

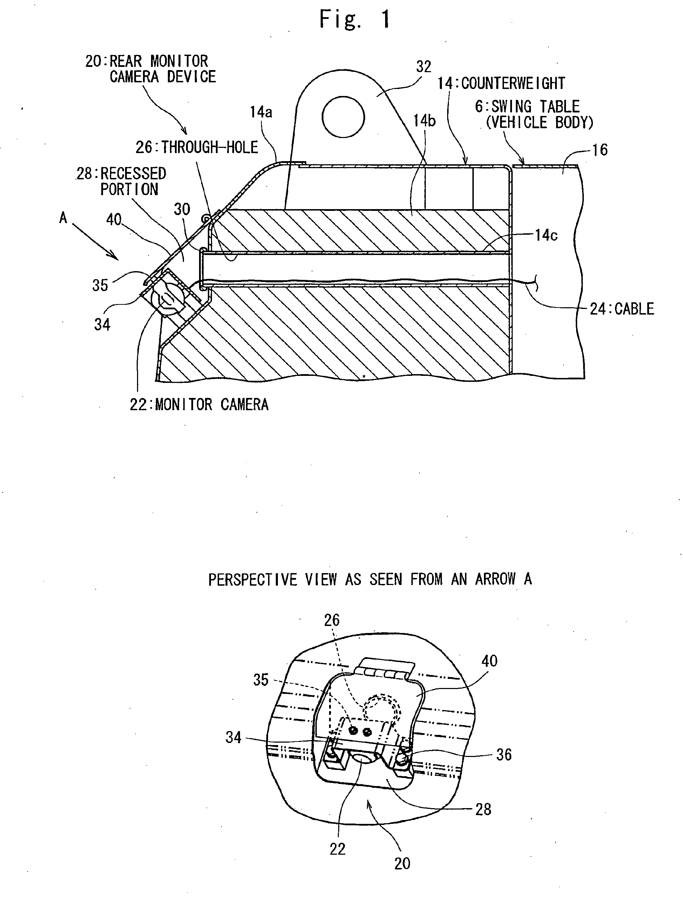

If described with reference to Figs. 1 and 2, a rear monitor camera device designated at 20 includes a monitor camera 22 attached to the outer surface of the counterweight 14, and a through-hole 26 which permits the passage of a cable 24 connected to the monitor camera 22 and is formed in the counterweight 14 from the outer surface thereof through to the inside of the swing table 6 or the engine room 16.

The counterweight 14 is formed having the same width as that of the swing table 6 in the right-and-left direction and in an arcuate shape with the outer surface slightly protruding rearward. The monitor camera 22 is mounted in a recessed portion 28 formed in an upper part of the outer surface at the center in the right-and-left direction thereof.

The counterweight 14 includes a counterweight body 14a formed like a hollow container by welding steel members such as steel plates, and a filler 14b comprising a heavy material such as scrap iron or the like is filled therein.

The through-hole 26 is formed by a steel pipe member 14c attached to the counterweight body 14a integrally therewith, the one end thereof opening to the recessed portion 28 and the other end thereof opening to the engine room 16. The one end of the pipe member 14c protrudes into the recessed portion 28, and an annular rubber seal 30 is attached to the protruded opening portion.

The cable 24 connected at its one end to the monitor camera 22 runs through the through-hole 26 and the engine room 16, and is connected at its other end to a monitor device (not shown) provided in a cab 12 (Fig. 3).

The size (diameter) of the pipe member 14c may be such that the cable 24 is permitted to run through but is desirably so set that the pipe member 14c also works as a reinforcing member for the counterweight body 14a.

The monitor camera 22 is attached by bolts 35 to the inside of a bracket 34 formed like a gate by folding a band plate, and the folded both ends of the bracket 34 are attached to the recessed portion 28 in the counterweight 14 by bolts 36.

The recessed portion 28 in the counterweight 14 is provided with a cover 40 which freely opens and closes to cover the recessed portion 28. The cover 40 is formed by using a steel plate in nearly a rectangular shape to cover an opening portion over the recessed portion 28 nearly along the outer surface of the counterweight body 14a. A hinge formed on part of the rectangle is welded to an upper end portion of the recessed portion 14a in the counterweight body 14a and freely opens and closes.

A pair of brackets 32 and 32 for hanging the counterweight 14 are provided on the upper surface of the counterweight 14 in the right-and-left direction thereof.

Described below is the action and effect of the above-mentioned rear monitor camera device 20 for the working vehicle.

The rear monitor camera device 20 for the working vehicle 2 includes a monitor camera 22 attached to the outer surface of the counterweight 14 installed on the rear part of the vehicle body 6, and the through-hole 26 which permits the passage of the cable 24 connected to the monitor camera 22 and is formed in the counterweight 14 from the outer surface thereof through to the inside of the vehicle body 6.

Therefore the cable 24 connected to the monitor camera 22 is arranged in the through-hole 26 in the counterweight 14, and is completely prevented from being damaged, such as coming in contact with foreign matter or trod down by the worker. Besides, the through-hole 26 formed in the counterweight 14 does not spoil the beauty of the counterweight 14.

The monitor camera 22 is held in the recessed portion 28 formed in the outer surface of the counterweight 14, and the one end of the through-hole 26 is opening in the recessed portion 28. Therefore, the monitor camera 22 is little likely to be damaged by obstacles.

The other end of the through-hole 26 is opening inside the vehicle body 6, i.e., in the engine room 16. Therefore, the cooling air sucked into the engine room 16 by an engine cooling fan partly flows out through the through-hole 26, preventing dust and rain water from depositing on the through-hole 26 or on the monitor camera 22.

The counterweight 14 includes the counterweight body 14a of the form of a container and the filler 14b filled therein. The through-hole 26 is formed by the pipe member 14c attached to the counterweight body 14a integrally therewith. Therefore, the pipe member 14c also effectively works as a reinforcing member for the counterweight body 14c.

The counterweight 14 is, further, provided with a cover 40 which freely opens and closes to cover the recessed portion 28 in which the monitor camera 22 is held. Therefore, the cover 40 more favorably protects the monitor camera 22 from the external foreign matter, helps improve the appearance of the counterweight 14, and prevents rain droplets from coming in direct contact with the monitor camera 22. Moreover, the cover 40 can be opened to easily clean and remove the dust and dirt deposited around the monitor camera 22.

Though the invention was described above in detail by way of the embodiment, it should be noted that the invention is in no way limited to the above embodiment only but can be varied or modified in various ways, for example, as described below without departing from the scope of the invention.

In the embodiment of the invention, the through-hole 26 is formed by the pipe member 14c. When the counterweight is to be formed by a casting, however, the through-hole may be formed by the casting.

## Claims

1. A rear monitor camera device for a working vehicle, comprising:
a monitor camera attached to the outer surface of a counterweight installed on the rear part of the vehicle body; and
a through-hole which permits the passage of a cable connected to the monitor camera and is formed in the counterweight from the outer surface thereof through to the inside of the vehicle body.

2. The rear monitor camera device for a working vehicle according to claim 1, wherein the monitor camera is held in a recessed portion formed in the outer surface of the counterweight, and one end of the through-hole is opened in the recessed portion.

3. The rear monitor camera device for a working vehicle according to claim 1 or 2, wherein the other end of the through-hole opening inside of the vehicle body is opened in the engine room.

4. The rear monitor camera device for a working vehicle according to any one of claims 1 to 3, wherein the counterweight comprises a counterweight body of the form of a container and a filler filled therein, and the through-hole comprises a pipe member attached to the counterweight body integrally together.

5. The rear monitor camera device for a working vehicle according to claim 2, further comprising a cover covering the recessed portion so as to be opened and closed.
